# FASCICULE DE BREVET EUROPEEN

(11) **EP 3 552 026 B1**
(45) Date de publication et mention de la délivrance du brevet: **27.01.2021**
(21) Numéro de dépôt: 17821676.8
(22) Date de dépôt: 01.12.2017
(51) Int. Cl.: G01P 5/08, G01F 1/56

(54) **DISPOSITIF ET PROCEDE DE MESURE D'UNE VITESSE D'ECOULEMENT DE GAZ**
VORRICHTUNG UND VERFAHREN ZUM MESSEN DER GASFLUSSRATE
DEVICE AND METHOD FOR MEASURING A GAS FLOW RATE

(30) Priorité: 08.12.2016 FR 1662169
(43) Date de publication de la demande: 16.10.2019
(73) Titulaire: Office National d'Etudes et de Recherches Aérospatiales, 91120 Palaiseau (FR)
(72) Inventeur: ELIAS, Paul-Quentin, 75005 Paris (FR)
(74) Mandataire: Plasseraud IP
(86) Numéro de dépôt international: PCT/FR2017/053343
(87) Numéro de publication internationale: WO 2018/104627

(56) Documents cités:
- US-A- 3 945 251
- MATLIS E H ET AL: "A.C. Plasma Anemometer for Hypersonic Mach Number Experiments", INSTRUMENTATION IN AEROSPACE SIMULATION FACILITIES, 2005. ICIASF '05. 21ST INTERNATIONAL CONGRESS ON SENDAI, JAPAN 29-01 AUG. 2005, PISCATAWAY, NJ, USA,IEEE, 29 août 2005 (2005-08-29), pages 245-256, XP010872630, DOI: 10.1109/ICIASF.2005.1569930 ISBN: 978-0-7803-9096-6
- G. -N. B. DANDARON ET AL: "Experimental study of a negative corona in atmospheric-pressure argon", PLASMA PHYSICS REPORTS, vol. 33, no. 3, 1 mars 2007 (2007-03-01), pages 243-248, XP055360638, US ISSN: 1063-780X, DOI: 10.1134/S1063780X07030099

## Description

La présente invention concerne un dispositif et un procédé pour mesurer une vitesse d'écoulement d'un gaz, notamment pour des applications aéronautiques.

De nombreuses méthodes existent déjà pour mesurer la vitesse d'un écoulement gazeux. En particulier, il est connu de mesurer la vitesse d'un écoulement gazeux en utilisant une sonde de Pitot. Une telle sonde comporte une prise de pression d'arrêt qui est orientée face à l'écoulement, et une prise de pression statique qui est disposée sur une paroi tangente à l'écoulement. La différence entre la pression d'arrêt et la pression statique est alors proportionnelle au carré de la vitesse du gaz. Toutefois, la prise de pression d'arrêt est constituée par un tube capillaire qui est susceptible d'être obstrué par du givre ou de la poussière, ou par un défaut d'opération de maintenance, à cause de quoi la fiabilité des sondes de Pitot peut être insuffisante.

Il est aussi connu de mesurer la vitesse d'un écoulement gazeux en utilisant une sonde à émission d'impulsions ultrasonores. Le principe de mesure repose sur une détermination d'un temps de transit des impulsions ultrasonores. Mais de telles sondes sont limitées à des vitesses à mesurer qui sont inférieures à 100 m/s (mètre par seconde).

Il est encore connu d'utiliser un faisceau laser qui traverse l'écoulement gazeux. Un décalage Doppler de la lumière rétrodiffusée, ou un décalage en longueur d'onde d'une raie d'absorption d'un composant du gaz, permet d'évaluer la vitesse de l'écoulement. Mais de telles méthodes nécessitent une source laser, au moins une fenêtre optique de sortie du faisceau vers l'écoulement et de collecte de lumière en retour. En outre, ces méthodes optiques sont peu précises lorsque la vitesse de l'écoulement est faible.

Par ailleurs, des sondes ioniques sont aussi connues pour mesurer la vitesse d'un écoulement gazeux. Dans une première catégorie de telles sondes, des ions sont générés dans l'écoulement, puis collectés en aval de l'endroit de leur génération. La vitesse de l'écoulement peut alors être déduite de la durée entre l'émission et la collecte des ions, appelée temps de vol des ions, dans le cas d'une génération d'ions par impulsions, ou déduite de la valeur d'un courant électrique qui collecté, dans le cas d'une génération continue ou quasi-continue des ions. Mais les sondes de cette première catégorie nécessitent de disposer une source des ions dans l'écoulement de gaz, ce qui peut perturber cet écoulement dont on désire mesurer la vitesse.

Enfin, des sondes ioniques d'une seconde catégorie utilisent de fines pointes qui sont polarisées par une tension électrique continue, positive ou négative, pour générer des ions dans l'écoulement de gaz. Pour certaines de ces sondes, une électrode de mesure est disposée en aval dans l'écoulement pour collecter des charges électriques correspondant aux ions générés. La valeur du courant électrique dans l'électrode de mesure peut alors être reliée à la vitesse de l'écoulement. Pour d'autres sondes, la pointe est polarisée par une tension continue qui est négative, pour produire une décharge couronne négative. Dans ce cas, une valeur de courant d'impulsions de la décharge couronne, ou une valeur de fréquence des impulsions de décharge couronne, fournit une mesure de la vitesse de l'écoulement. De telles sondes ioniques sont décrites dans l'ouvrage "Applications of the corona discharge for measurements of density and velocity transients in air flow," de F.D. Werner et R.L. Geronime, 1953, pp.53-142, et dans le brevet US 3,945,251 intitulé "Trichel Pulse Corona gas velocity instrument," de E.T. Pierce. Mais de telles sondes ioniques à polarisation électrique continue présentent une hystérésis importante, telle que des mesures successives sont affectées par une dérive des résultats, et qu'il est alors difficile d'obtenir une valeur fiable pour la vitesse de l'écoulement du gaz.

Le document "A.C. Plasma Anemometer for Hypersonic Mach Number Experiments" de E. H. Matlis, T. C. Corket et S. P. Gogineni propose un système pour mesurer une vitesse d'écoulement d'un gaz qui travaille avec un courant alternatif et mentionne que les mesures ne montrent pas d'hystérésis.

A partir de cette situation, un but de la présente invention est de proposer une nouvelle sonde pour mesurer la vitesse d'un écoulement gazeux, qui ne présente pas les inconvénients des sondes antérieures rappelées ci-dessus. En particulier, les qualités suivantes sont recherchées :
- une gamme de mesure, appelée aussi dynamique de mesure, qui est étendue, éventuellement contrôlable, permettant de mesurer des écoulements à basse vitesse et à haute vitesse ;
- éviter l'utilisation d'un capillaire qui est susceptible d'être obstrué ;
- éviter l'utilisation de fenêtres optiques, qui sont susceptibles d'être salies ou rendues opaques ou diffusantes ;
- absence d'hystérésis lors de mesures qui sont effectuées successivement ;
- un fonctionnement compatible avec un système antigivrage ou de dégivrage d'une sonde qui est utilisée pour les mesures ; et
- une structure qui isole électriquement une partie de circuit à haute tension d'une partie de circuit à basse tension.

Pour atteindre l'un au moins de ces buts ou d'autres, un premier aspect de l'invention propose un dispositif de mesure d'une vitesse d'un écoulement de gaz, qui comprend :
- une sonde rigide destinée à être placée dans l'écoulement de gaz, la sonde comprenant une électrode axiale qui présente une extrémité découverte destinée à être en contact avec le gaz, cette extrémité découverte ayant un rayon de courbure adapté pour produire un renforcement de champ électrique par effet de pointe, et comprenant une électrode périphérique qui est isolée électriquement de l'électrode axiale, et qui possède une partie découverte aussi destinée à être en contact avec le gaz, située à distance de l'électrode axiale ; et
- une source d'alimentation en tension électrique, ayant deux bornes de sortie qui sont connectées électriquement l'une à l'électrode axiale et l'autre à l'électrode périphérique.

Dans le cadre de la présente invention, on entend par extrémité d'électrode ayant un rayon de courbure qui est adapté pour produire un renforcement du champ électrique par effet de pointe, une extrémité d'électrode qui possède un rayon de courbure inférieur à 5 mm (millimètre), de préférence inférieur à 2 mm. L'effet électrique dit effet de pointe est très connu de l'Homme du métier, si bien qu'il n'est pas nécessaire de le décrire ici. Cet effet est d'autant plus important que le rayon de courbure de l'extrémité de l'électrode qui forme la pointe, est petit. Lorsque ce rayon de courbure est suffisamment petit, inférieur à 5 mm, de préférence inférieur à 2 mm, un champ électrique local est suffisamment augmenté par la géométrie en pointe pour atteindre un seuil d'ionisation du gaz.

Selon l'invention, la source d'alimentation produit une tension électrique qui est alternative, c'est-à-dire avec des périodes de valeurs négatives de tension et des périodes de valeurs positives de tension qui sont alternées, et le dispositif comprend en outre :
- un circuit de détection, comprenant au moins une spire conductrice disposée autour d'une connexion électrique qui relie l'une des électrodes de la sonde à l'une des bornes de la source d'alimentation, ou disposée autour de l'électrode axiale, et comprenant un compteur agencé pour compter des impulsions électriques qui sont générées dans la spire par induction, sélectivement pendant au moins une fenêtre de temps durant laquelle un potentiel électrique de l'électrode axiale est inférieur à un potentiel électrique de l'électrode périphérique.

Ainsi, lorsque la sonde est alimentée avec la tension électrique alternative par la source d'alimentation, un nombre d'impulsions électriques qui sont comptées par le circuit de détection, correspondant à un nombre de décharges électriques qui sont apparues entre l'électrode axiale et l'électrode périphérique à travers le gaz, constitue une mesure de la vitesse de l'écoulement du gaz.

Un tel dispositif présente les avantages suivants :
- l'utilisation d'une tension alternative entre les électrodes de la sonde supprime un éventuel comportement à hystérésis ;
- le comptage d'impulsions de décharge couronne pendant les périodes où l'électrode axiale, qui comporte la pointe, est polarisée négativement par rapport à l'électrode périphérique, limite le fonctionnement de mesure à un régime de décharge couronne négative, qui génère des impulsions de courant régulières contrairement à un régime de décharge couronne positive pour lequel l'électrode axiale qui comporte la pointe serait polarisée positivement par rapport à l'électrode périphérique ;

- la gamme de mesure est très étendue. Notamment elle est compatible avec des utilisations à bord d'avions ; et
- la détection des impulsions de décharge électrique par induction permet d'isoler électriquement un circuit d'alimentation qui produit la tension à appliquer entre les deux électrodes de la sonde, et le circuit de détection. Une sécurité de fonctionnement en résulte pour le dispositif de mesure de vitesse d'écoulement du gaz, et aussi pour des circuits électriques externes.

Dans diverses réalisations d'un dispositif conforme à l'invention, les configurations ou perfectionnements suivants peuvent être utilisés, séparément ou en combinaison de plusieurs d'entre eux :
- la partie découverte de l'électrode périphérique peut posséder une forme annulaire autour d'un axe de symétrie de l'extrémité découverte de l'électrode axiale ;
- la partie découverte de l'électrode périphérique peut être en retrait par rapport à l'extrémité découverte de l'électrode axiale, avec un sens de retrait qui est opposé à l'extrémité découverte de l'électrode axiale ; et
- le dispositif peut comprendre en outre une résistance de ballast qui est connectée en série entre l'une des électrodes de la sonde et la borne de la source d'alimentation qui est reliée à cette électrode. Une telle résistance de ballast peut avantageusement être agencée dans la sonde. En particulier, la résistance de ballast peut être disposée dans la sonde autour d'une extrémité postérieure de l'électrode axiale, opposée à son extrémité découverte, et être en contact électrique avec une surface périphérique de cette extrémité postérieure de l'électrode axiale. Un tel agencement peut être utilisé pour former un système antigivrage ou de dégivrage de la sonde. Par exemple, lorsque la résistance de ballast est formée par un cylindre de matériau conducteur électriquement, la sonde peut comprendre en outre un tube conducteur électriquement qui est disposé et connecté électriquement pour former un condensateur avec le cylindre de la résistance de ballast. Ainsi, un courant électrique qui circule dans le condensateur lorsque la sonde est alimentée par la source d'alimentation, génère par effet Joule dans le cylindre de la résistance de ballast, de la chaleur apte à chauffer l'électrode axiale. Pour une telle structure de la sonde, la spire conductrice peut en outre être disposée dans la sonde autour d'une partie de l'électrode axiale qui n'est pas recouverte par le cylindre de la résistance de ballast, en en étant isolée. Eventuellement, des signaux d'impulsions électriques qui sont issus de cette spire peuvent être amplifiés ou transformés avant d'être transmis vers l'extérieur de la sonde, pour assurer une fiabilité de cette transmission.

Un second aspect de l'invention propose un procédé pour mesurer une vitesse d'un écoulement de gaz, qui comprend les étapes suivantes :
/1/ fournir une sonde rigide, comprenant une électrode axiale qui présente une extrémité découverte avec un rayon de courbure adapté pour produire un renforcement de champ électrique par effet de pointe, et comprenant une électrode périphérique qui est isolée électriquement de l'électrode axiale, et qui possède une partie découverte située à distance de l'électrode axiale ;
/2/ placer la sonde dans l'écoulement de gaz, de sorte que l'extrémité découverte de l'électrode axiale et la partie découverte de l'électrode périphérique soient simultanément en contact avec le gaz ; et
/3/ appliquer une tension électrique entre l'électrode axiale et l'électrode périphérique, de façon à produire des décharges électriques entre les deux électrodes à travers le gaz.

Selon l'invention, la tension électrique qui est appliquée est une tension électrique alternative, et le procédé comprend en outre les étapes suivantes :
/4/ détecter et compter des impulsions électriques qui sont générées par induction dans au moins une spire conductrice disposée autour d'une connexion électrique utilisée pour appliquer la tension alternative aux électrodes, ou disposée autour de l'électrode axiale, et qui correspondent à des décharges électriques à travers le gaz, sélectivement pendant au moins une fenêtre de temps durant laquelle un potentiel électrique de l'électrode axiale est à inférieur à un potentiel électrique de l'électrode périphérique ; et
/5/ déduire une valeur de la vitesse de l'écoulement du gaz à partir d'un résultat de comptage des impulsions électriques.

Préférablement, le gaz de l'écoulement comprend au moins un composé qui possède une électronégativité importante, tel que de l'air par exemple, pour obtenir une décharge couronne négative qui soit plus stable à partir de l'électrode axiale pendant des alternances négatives de la tension d'alimentation.

De préférence, la sonde peut être orientée par rapport à l'écoulement de gaz de sorte que l'extrémité découverte de l'électrode axiale soit tournée vers une direction amont de l'écoulement, et qu'un axe de symétrie de cette extrémité découverte de l'électrode axiale soit parallèle à l'écoulement de gaz.

De préférence aussi, le comptage des impulsions électriques peut être poursuivi pendant plusieurs fenêtres de temps successives, chaque fenêtre de temps étant contenue dans une alternance négative du potentiel électrique de l'électrode axiale par rapport au potentiel électrique de l'électrode périphérique, séparément de chaque autre fenêtre de temps.

De préférence encore, une durée moyenne entre deux impulsions électriques qui sont successives à l'intérieur d'une même fenêtre de temps, ou une fréquence moyenne des impulsions électriques à l'intérieur d'une même fenêtre de temps, peut être calculée. Alors, la valeur de la vitesse de l'écoulement du gaz peut être déduite de la durée moyenne ou de la fréquence moyenne.

Possiblement, le calcul de la vitesse de l'écoulement de gaz peut résulter d'une phase étalonnage et d'une phase de mesure, dite mesure utile. Dans ce cas, la vitesse de l'écoulement de gaz peut être calculée en utilisant la formule U = U_{1·}(N₀ - N)/(N₀ - N₁), où N₀ est un premier nombre d'impulsions électriques qui sont comptées pour une première mesure d'étalonnage qui est effectuée lorsque la vitesse de l'écoulement de gaz est nulle, N₁ est un deuxième nombre d'impulsions électriques qui sont comptées pour une deuxième mesure d'étalonnage effectuée lorsque la vitesse de l'écoulement de gaz est non-nulle et égale à U₁, N est un troisième nombre d'impulsions électriques qui sont comptées pour la mesure utile, et U est la valeur de la vitesse de l'écoulement de gaz pendant la mesure utile. Pour cela, la tension électrique alternative qui est appliquée entre les deux électrodes de la sonde est identique pour les deux mesures d'étalonnage et pour la mesure utile.

Un procédé conforme au second aspect de l'invention peut être mis en œuvre en utilisant un dispositif qui est conforme au premier aspect. En particulier, lorsque ce dispositif comporte une résistance de ballast dans la sonde, et un tube pour former un condensateur avec la résistance de ballast, une puissance de chauffage qui est dissipée dans la résistance de ballast peut être ajustée en modifiant une fréquence ou une forme de la tension alternative qui est produite par la source d'alimentation. Ainsi, la source d'alimentation possède les deux fonctions de production de la décharge couronne négative d'une part, et d'antigivrage ou dégivrage de la sonde d'autre part, pour éviter qu'une couche de glace isolante électriquement recouvre l'extrémité découverte de l'électrode axiale.

Enfin, un procédé conforme à l'invention peut être mis en œuvre à bord d'un aéronef qui est adapté pour se déplacer par rapport à de l'air extérieur à cet aéronef, formant le gaz en écoulement évoqué précédemment. Pour cela, la sonde est fixée rigidement à l'aéronef de façon à être maintenue dans l'écoulement d'air en dehors de l'aéronef. Dans une telle application, l'électrode périphérique de la sonde peut avantageusement être connectée électriquement à une masse de l'aéronef, de sorte qu'un potentiel électrique de cette électrode périphérique soit constamment égal à un potentiel électrique de la masse de l'aéronef.

D'autres particularités et avantages de la présente invention apparaîtront dans la description ci-après d'exemples de réalisation non limitatifs, en référence aux dessins annexés, dans lesquels :
- la figure 1 est un schéma de principe d'un dispositif de mesure conforme à la présente invention ;
- la figure 1a est un agrandissement d'une partie de la figure 1 ;
- les figures 2a-2d sont une série de diagrammes temporels à lire en combinaison, qui illustrent un fonctionnement d'un dispositif de mesure conforme à l'invention ; et
- la figure 3 est une vue en coupe d'une sonde qui est conforme à un mode de réalisation préféré de la présente invention.

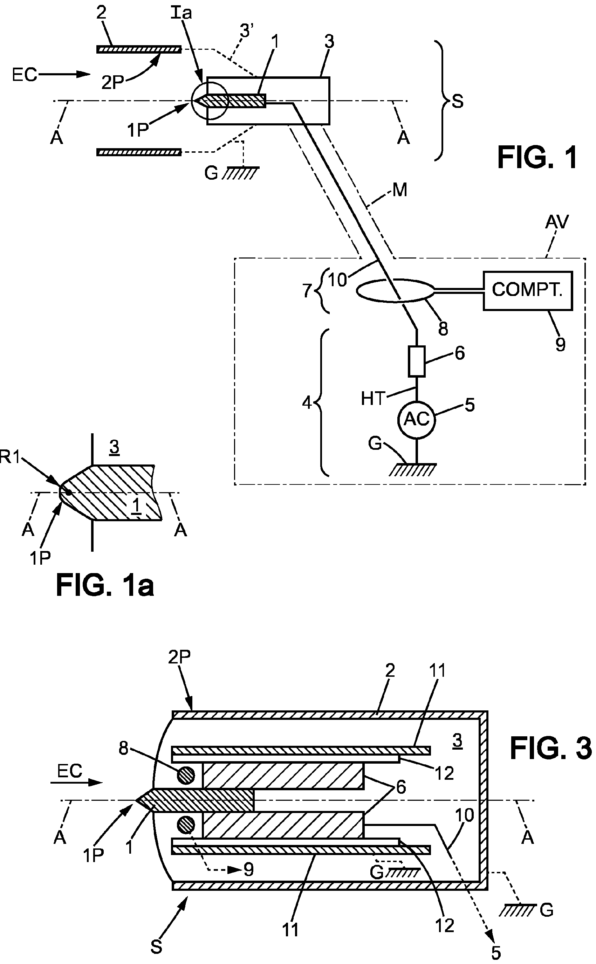

Pour raison de clarté, les dimensions des éléments qui sont représentés dans ces figures ne correspondent ni à des dimensions réelles ni à des rapports de dimensions réels. En outre, des références identiques qui sont indiquées dans les figures 1 et 3 désignent des éléments identiques ou qui ont des fonctions identiques.

Dans la présente description, on entend par décharge couronne négative une ionisation d'un gaz au voisinage d'une extrémité d'électrode à faible rayon de courbure, lorsqu'une tension négative est appliquée à cette électrode par rapport à une électrode périphérique. Les impulsions de courant électrique qui résultent d'une telle décharge couronne négative, lorsque le gaz est électronégatif, tel que l'air par exemple, sont appelées impulsions de Trichel. Chaque impulsion dure quelques dizaines de nanosecondes, avec une amplitude de quelques milliampères, et une fréquence de répétition des impulsions de quelques dizaines de kilohertz. Lorsqu'une tension positive est appliquée à l'électrode à faible rayon de courbure par rapport à l'électrode périphérique, on obtient une décharge couronne positive, dont les caractéristiques sont différentes.

Conformément à la figure 1, une sonde S comprend une électrode axiale 1 et une électrode périphérique 2. L'électrode axiale 1 possède un axe de symétrie A-A, et est logée dans une enveloppe 3 qui est isolante électriquement. Une extrémité 1P de l'électrode axiale 1 est découverte en dehors de l'enveloppe 3, pour être en contact avec un gaz externe à la sonde S. La figure 1a montre un grossissement de l'extrémité découverte 1P de l'électrode axiale 1. Cette extrémité découverte 1P présente une forme de pointe parallèle à l'axe A-A, avec un rayon de courbure R1 qui est inférieur à 5 mm (millimètre), de préférence inférieure à 2 mm. L'électrode axiale 1 est en matériau conducteur électrique, préférablement en un alliage qui est résistant à l'abrasion et à la pulvérisation atomique lorsqu'il est exposé à un plasma.

L'électrode périphérique 2 peut posséder une forme annulaire ayant aussi l'axe A-A comme axe de symétrie. Elle est disposée à distance de l'électrode axiale 1, notamment radialement par rapport à l'axe A-A. L'électrode périphérique 2 est aussi constituée d'un matériau qui est conducteur électriquement, et possède une partie découverte 2P qui est destinée à être en contact avec le gaz externe à la sonde S en même temps que l'électrode axiale 1. Pour la configuration de la sonde S qui est représentée dans la figure 1, l'électrode périphérique 2 peut être maintenue en position fixe par rapport à l'électrode axiale 1 par au moins un bras 3', qui est conçu pour peu perturber, ou perturber le moins possible un écoulement EC du gaz externe autour de la sonde S, possiblement en permettant un passage du gaz entre l'enveloppe 3 et l'électrode périphérique 2. Le bras 3' est aussi conçu pour isoler électriquement l'électrode périphérique 2 par rapport à l'électrode axiale 1, tout en permettant de connecter électriquement l'électrode périphérique 2 à une borne d'alimentation électrique de la sonde S, comme expliqué ci-dessous.

Par exemple, l'électrode axiale 1 peut être en tungstène (W), en molybdène (Mo) ou en acier inoxydable, et l'électrode périphérique peut être en acier inoxydable ou en alliage d'aluminium (Al).

Un circuit d'alimentation électrique 4 permet d'appliquer une tension électrique entre l'électrode axiale 1 et l'électrode périphérique 2. Le circuit d'alimentation 4 comprend une source d'alimentation en tension 5, et optionnellement une résistance de ballast 6. Une première borne de sortie de la source d'alimentation 5, notée HT pour haute tension, est connectée à l'électrode axiale 1, et une seconde borne de sortie de la source d'alimentation 5, notée G, est connectée à l'électrode périphérique 2. Préférablement, la borne G peut être connectée à une masse d'un support AV de la sonde S. Dans ce cas, la sonde S peut être fixée rigidement au support AV par l'intermédiaire d'un mât M, et le support AV peut contenir le circuit d'alimentation électrique 4. Pour une telle configuration, une connexion électrique 10 relie l'électrode axiale 1 à la borne HT de la source d'alimentation électrique 5 à travers le mât M, et l'électrode périphérique 2 est connectée à la borne G à travers le bras 3', l'enveloppe isolante 3 et le mât M. Pour une application aéronautique, le support AV de la sonde S peut être un aéronef, par exemple un avion, et le gaz de l'écoulement EC est l'air environnant autour de l'avion. Le but de la sonde S est alors de permettre de mesurer la vitesse de l'écoulement d'air EC par rapport au support AV. Préférablement, la sonde S est orientée par rapport à l'écoulement EC de sorte que l'axe A-A soit parallèlement à l'écoulement, avec l'extrémité découverte 1P de l'électrode axiale 1 qui est orientée vers l'amont de l'écoulement.

Par exemple, la résistance de ballast 6 peut être comprise entre 1 mégohm (MΩ) et 100 MΩ, par exemple de quelques dizaines de mégohms.

Dans un tel système à deux électrodes où le rayon de courbure de l'une des électrodes est plus petit que celui de l'autre électrode, l'application d'une différence de potentiel électrique entre les deux électrodes provoque une concentration de champ électrique à proximité de celle des électrodes qui possède le plus petit rayon de courbure. En augmentant la différence absolue de potentiel électrique entre les deux électrodes, le champ électrique qui est concentré devant l'électrode au plus petit rayon de courbure peut dépasser le seuil de claquage du gaz. Une décharge électrique se produit alors à travers le gaz, pendant laquelle une avalanche électronique va ioniser des atomes et/ou des molécules du gaz, et ainsi former un plasma de charges positives, i.e. des cations, et de charges négatives, i.e. surtout des électrons. Les propriétés de cette décharge électrique sont déterminées par la nature du gaz, y compris sa densité, sa température, sa composition chimique, et la polarité de la tension électrique qui est appliquée entre les deux électrodes.

Lorsque le gaz est l'air, la topologie et le comportement de la décharge électrique sont très différents selon la polarité de la tension électrique qui est appliquée. Lorsque l'électrode au plus petit rayon de courbure est polarisée positivement, une décharge couronne positive se produit, sous la forme de filaments de plasma qui se propagent à partir de cette électrode qui possède le plus petit rayon de courbure. Ces filaments de plasma, qui ont des distributions spatiale et temporelle aléatoires, produisent des impulsions électriques dans le circuit fermé d'alimentation des électrodes.

Mais lorsque l'électrode au plus petit rayon de courbure est polarisée négativement par rapport à l'autre électrode, une décharge couronne négative est obtenue, sous forme d'une série régulière ou à peu près régulière d'impulsions électriques de Trichel. Chaque impulsion correspond à la formation d'espèces ioniques au voisinage de l'électrode à petit rayon de courbure. La distribution temporelle de ces impulsions est étroite et bornée par une fréquence maximale. Quand la tension électrique qui est appliquée entre les deux électrodes est en deçà d'un seuil inférieur, les impulsions sont irrégulières. Quand la tension appliquée dépasse un seuil supérieur, un régime de décharge électrique quasi-continue apparaît. Mais entre ces deux seuils inférieur et supérieur, la fréquence des impulsions de décharge électrique à travers le gaz dépend de la valeur de la tension électrique qui est appliquée entre les deux électrodes, du gaz, y compris sa valeur d'électronégativité et son taux d'humidité, de la vitesse de l'écoulement EC du gaz, du matériau de l'électrode au rayon de courbure le plus petit, de sa géométrie, y compris son rayon de courbure et sa rugosité de surface, et du champ électrique ambiant.

La formation de chaque impulsion de décharge électrique à travers le gaz procède par avalanche électronique, initiée dans la zone où le champ électrique est maximal, c'est-à-dire à proximité de l'électrode qui possède le rayon de courbure le plus petit. Une telle avalanche débute par la formation d'électrons germes au niveau de la pointe de l'électrode, par émission à effet de champ ou par émission secondaire qui est provoquée par l'impact d'un cation sur l'électrode. Dans une décharge couronne négative, ces électrons sont repoussés de l'électrode en pointe par le champ électrique qui en émane. En même temps, ils sont accélérés et vont entrer en collision avec des atomes ou molécules du gaz. Une partie de ces électrons qui ont suffisamment d'énergie va produire des collisions ionisantes qui vont créer chacune un électron supplémentaire et un cation supplémentaire. Une multiplication exponentielle du nombre d'électrons, appelée avalanche, est ainsi produite, au fur et à mesure de l'éloignement des électrons par rapport à l'électrode à petit rayon de courbure. Cette avalanche va ensuite s'arrêter à cause de deux phénomènes. A mesure que le nuage d'électrons s'éloigne de l'électrode à petit rayon de courbure, le champ électrique qui est créé par cette électrode diminue, réduisant en conséquence l'énergie des électrons au moment de nouvelles collisions. En plus, la formation de charges électriques libres dans le gaz produit un écran électrostatique qui atténue le champ électrique créé par l'électrode à petit rayon de courbure. Le champ électrique auquel sont soumis les électrons va ainsi devenir trop faible, et les électrons vont se lier à des atomes ou molécules du gaz, notamment des molécules de dioxygène (O₂) dans le cas de l'air, pour former des anions. Alors, la formation d'une nouvelle avalanche, et donc d'une nouvelle impulsion de décharge électrique, n'est de nouveau possible qu'après que les cations et les anions produits par la décharge électrique précédente ont été collectés par les deux électrodes, grâce à une partie résiduelle du champ électrique. Il est alors connu, notamment du document "Numerical studies of Trichel pulses in airflows", de F.C. Deng, L.Y. Ye and K.C. Song, J. Phys. D. Appl. Phys., vol. 46, no. 42, p. 425202, Oct. 2013, que l'écoulement EC du gaz modifie le temps qui est nécessaire pour une telle collecte des ions, et donc modifie par effet de conséquence la fréquence de répétition des avalanches, c'est-à-dire la fréquence des décharges électriques qui apparaissent entre les deux électrodes.

En outre, il est aussi connu que les variations de la tension électrique instantanée qui existe entre les deux électrodes, les variations du courant électrique induit dans les électrodes et des variations de la vitesse de l'écoulement EC peuvent provoquer des hystérésis sur le courant moyen de décharge électrique.

Compte tenu de ces observations, la présente invention propose d'utiliser :
- une tension électrique alternative pour polariser les deux électrodes l'une par rapport à l'autre, afin de supprimer d'éventuelles hystérésis qui pourraient perturber les mesures, grâce à l'inversion régulière du signe de cette tension électrique ; et
- limiter les mesures à intérieur de périodes où l'électrode au plus petit rayon de courbure est polarisée négativement par rapport à l'autre électrode, pour bénéficier de la régularité supérieure d'une décharge couronne négative par rapport à une décharge couronne positive.

Dans ces conditions, des impulsions de courant électrique apparaissent dans le circuit d'alimentation électrique 4, et donc dans l'électrode axiale 1 et la connexion électrique 10, avec une fréquence d'impulsions, ou une durée moyenne entre deux impulsions successives, qui dépend de la vitesse de l'écoulement EC. Plus précisément, la durée entre deux impulsions successives augmente lorsque la vitesse de l'écoulement EC devient plus grande, si la pointe découverte 1P de l'électrode axiale 1 est orientée vers l'amont de l'écoulement EC.

Selon une caractéristique additionnelle de l'invention, de telles impulsions sont détectées par induction, permettant d'éviter qu'une continuité de chemin électrique relie le circuit d'alimentation électrique 4 à un circuit qui est utilisé pour détecter le courant de décharge couronne négative. Un tel circuit de détection 7 comprend au moins une spire conductrice 8, ou possiblement plusieurs spires sous la forme d'une bobine de détection, qui entoure(nt) la connexion électrique 10 et est (sont) connectée(s) à un compteur d'impulsions 9, noté COMPT. Il est ainsi possible de compter les impulsions électriques qui sont induites dans la spire 8 par induction par les impulsions de décharge électrique qui circulent dans la connexion électrique 10. Par exemple, la spire 8 peut être réalisée sous la forme d'une bobine de Rogowski connue de l'Homme du métier.

Afin de bénéficier des avantages qui ont été cités précédemment pour une tension électrique de polarisation des électrodes qui est alternative, et ceux de la décharge couronne négative, la détection et le comptage des impulsions sont limités selon l'invention à l'intérieur des fenêtres de temps FN pendant lesquelles le potentiel électrique de l'électrode axiale 1 est inférieur à celui de l'électrode périphérique 2. Pour cela, les fenêtres de temps FN sont contenues dans des périodes de temps où la tension qui est délivrée par la source 5 est négative. Dans le jargon de l'Homme du métier, ces périodes de temps sont appelées alternances négatives de la tension électrique alternative.

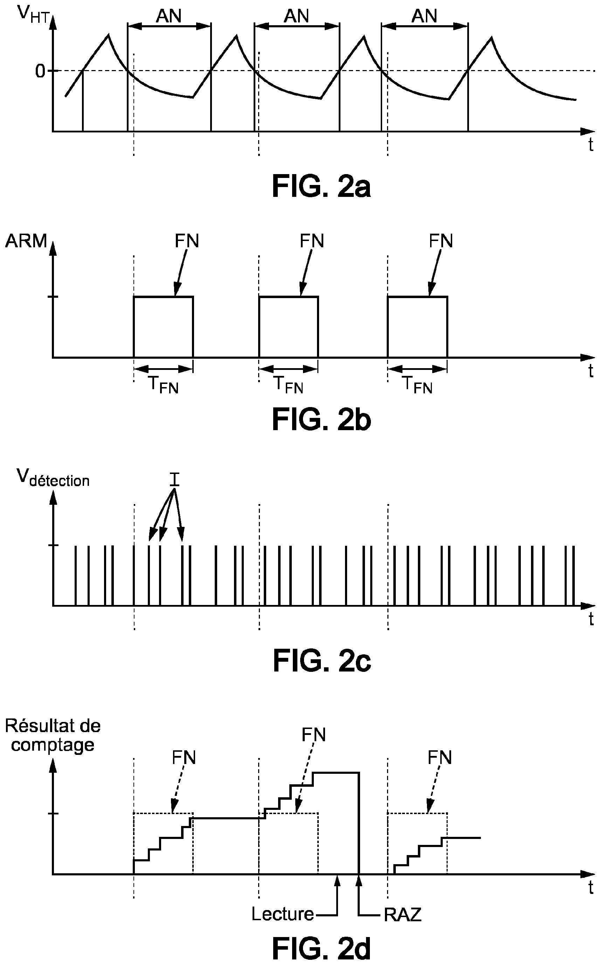

La figure 2a montre les variations de la tension électrique, notée V_{HT}, qui est délivrée par la source 5 en fonction du temps, noté t. Préférablement, ces variations peuvent être périodiques, mais peuvent avoir une forme quelconque. Une valeur-crête de la tension V_{HT} peut être comprise entre 1 kV (kilovolt) et 20 kV, et sa fréquence peut être de l'ordre de quelques centaines de hertz lorsque le gaz de l'écoulement EC est l'air. AN désigne les alternances négatives de la tension V_{HT}.

La figure 2b montre un signal possible pour l'activation du comptage des impulsions qui sont détectées par le circuit 7. Ce signal d'activation, noté ARM, autorise le comptage des impulsions à l'intérieur de fenêtres de temps FN, qui sont elles-mêmes contenues dans les alternances négatives AN de la tension V_{HT}. T_{FN} désigne la durée de chaque fenêtre de temps FN.

Pendant chaque alternance positive de la tension V_{HT}, les charges négatives et positives résiduelles qui sont présentes devant l'extrémité 1P de l'électrode axiale 1 sont neutralisées. Ceci permet de démarrer une nouvelle fenêtre FN de comptage d'impulsions sans charge parasite initiale.

La figure 2c est un exemple de distribution temporelle des impulsions électriques qui sont détectées par le circuit 7, notées I. Ces impulsions I se produisent aussi bien pendant les alternances positives que les alternances négatives de la tension V_{HT}, mais seules celles des alternances négatives ont une régularité suffisante pour procurer une mesure fiable de la vitesse de l'écoulement EC. La figure 2c représente par exemple la valeur absolue de la tension qui existe entre les extrémités de la spire conductrice 8, et qui est notée V_{détection}.

Enfin, la figure 2d montre l'évolution d'un résultat de comptage des impulsions I, lorsque le comptage est effectué continûment pendant deux alternances négatives successives de la tension électrique V_{HT}. Le résultat du comptage est lu après la fin de la dernière fenêtre de temps FN de la durée de comptage, puis une remise à zéro du comptage, notée RAZ, est effectuée avant le début d'une nouvelle fenêtre de temps FN pour un nouveau comptage d'impulsions.

De façon phénoménologique, la durée moyenne T entre deux impulsions successives qui sont détectées est une fonction croissante de la vitesse U de l'écoulement EC, lorsque la sonde S est orientée vers l'amont de l'écoulement EC comme représenté sur la figure 1, conformément à la relation suivante : T = α/(β·V_{HT} - U) = T_{FN}/N, où α et β sont deux constantes positives qui dépendent de la géométrie des électrodes 1 et 2, du gaz et de l'inclinaison possible de la sonde S par rapport à l'écoulement EC, et où T_{FN} est encore la durée d'une fenêtre de temps FN et N est le nombre d'impulsions I qui sont comptées pendant 1 fenêtre de temps FN. Pour obtenir des résultats plus précis, il est possible de compter les impulsions I continûment pendant plusieurs fenêtres de temps FN successives, comme représenté sur la figure 2d, puis de diviser le résultat du comptage par le nombre des fenêtres de temps FN du comptage total.

De façon générale pour l'invention, lorsqu'une telle relation phénoménologique est utilisée, les constantes α et β peuvent être déterminées en utilisant une séquence d'étalonnage avec le même gaz que celui des mesures utiles, pour la même orientation de la sonde S par rapport à l'écoulement EC pendant la séquence d'étalonnage que pendant chaque mesure utile, et pour la même tension alternative V_{HT} qui est produite par la source 5. Une telle séquence d'étalonnage peut comprendre les deux mesures suivantes :
- lors d'une première mesure d'étalonnage, la vitesse de l'écoulement EC est nulle (U = 0), et le nombre d'impulsions comptées est N₀. Alors : α/(β·V_{HT}) = T_{FN}/N₀, puis
- lors d'une seconde mesure d'étalonnage, la vitesse de l'écoulement EC est non-nulle, connue et égale à U₁, et le nombre d'impulsions comptées est N₁. Alors : α/(β·V_{HT} - U₁) = T_{FN}/N₁.

Par conséquent, pour une mesure utile, la vitesse U de l'écoulement EC est donnée par la relation : U = U₁·(N₀ - N)/(N₀ - N₁), où N est le nombre d'impulsions I qui sont comptées pour la mesure utile. La séquence d'étalonnage peut être exécutée une fois initialement, ou être répétée à plusieurs reprises entre des mesures utiles successives lorsque la vitesse U peut être connue en utilisant d'autres méthodes. De telles autres méthodes peuvent utiliser par exemple des mesures GPS, ou un capteur embarqué qui soit d'un type différent lorsque le support AV est un avion, notamment une sonde de type Pitot.

La dynamique de mesure d'un dispositif selon l'invention peut être contrôlée par l'amplitude de la tension alternative V_{HT} qui est appliquée entre les électrodes 1 et 2. En effet, cette dynamique est contrôlée par le nombre moyen d'impulsions I dans chaque fenêtre de temps FN, lui-même étant une fonction croissante de la tension alternative V_{HT}. Il est ainsi possible d'obtenir une bonne sensibilité pour des faibles valeurs de la vitesse U de l'écoulement EC, par exemple de l'ordre d'une dizaine de mètres-par-seconde, aussi bien que pour des valeurs élevées de la vitesse U, par exemple de l'ordre de plusieurs centaines de mètres-par-seconde.

Un avantage supplémentaire de l'invention résulte de la nature numérique du signal de mesure qui est acquis, par opposition à une mesure analogique qui peut être sensible à des perturbations électromagnétiques.

La figure 3 montre une réalisation alternative d'un dispositif de mesure de vitesse conforme à l'invention. Dans cette réalisation, l'électrode périphérique 2 est agencée sur la surface externe de l'enveloppe isolante 3, en retrait vers l'aval de l'écoulement EC du gaz par rapport à l'extrémité 1P de l'électrode axiale 1.

La résistance de ballast 6 peut être logée dans la sonde S, et être formée par un cylindre de matériau à faible conduction électrique, qui entoure une partie postérieure de l'électrode axiale 1, opposée à son extrémité découverte 1P. Ce cylindre peut être en contact électrique avec la partie postérieure de l'électrode axiale 1, et peut être lui-même relié à partir de son extrémité postérieure, à la connexion électrique 10 qui provient de la source 5. Avantageusement, un tube 11 de matériau conducteur électriquement peut être disposé autour du cylindre de la résistance de ballast 6, avec une couche 12 de matériau isolant électriquement qui est intermédiaire entre le cylindre de la résistance de ballast 6 et le tube 11. Le tube 11 est alors connecté électriquement à la masse G. De cette façon, le cylindre de la résistance de ballast 6 et le tube 11 forment un condensateur cylindrique. Le courant électrique qui circule dans le cylindre de la résistance de ballast 6 et dans ce condensateur lorsque la sonde S est alimentée en tension alternative par la source 5, produit de la chaleur par effet Joule à l'intérieur du cylindre de la résistance de ballast 6. Si le matériau isolant électriquement de l'enveloppe 3 est aussi isolant thermiquement, la configuration de la sonde S concentre sur l'électrode axiale 1 la chaleur qui est produite dans le cylindre de la résistance de ballast 6. Un tel chauffage peut être utilisé pour assurer que du givre ne se forme pas sur l'extrémité découverte 1P de l'électrode axiale 1, ou pour le faire fondre. La puissance de chauffage de l'électrode axiale 1 peut alors être ajustée en modifiant la fréquence ou la forme des variations temporelles de la tension alternative V_{HT}, notamment en modifiant la pente des fronts montants de cette tension alternative sans modifier la durée des fenêtres de temps FN qui sont dédiées au comptage des impulsions I. En effet, le courant qui traverse le condensateur formé par le cylindre de la résistance de ballast 6 et par le tube 11, peut être modifié de cette façon pour varier la puissance du chauffage de l'électrode axiale 1. Un tel mode de chauffage de l'électrode axiale 1 est indépendant de l'existence et de l'intensité moyenne du courant de décharge électrique qui circule dans l'électrode 1, à travers le gaz, et dans l'électrode 2. Par exemple, le matériau du cylindre de la résistance de ballast 6 peut être une résine conductrice ou du carbone graphite (C), et le tube 11 peut être en un alliage d'aluminium (Al) ou en un métal conducteur. La couche intermédiaire 12 peut être constituée d'un matériau polymère, tel que du polytétrafluoroéthylène (PTFE), du Mylar®, du Kapton®, ou être constituée d'une céramique isolante dont la tension de claquage est supérieure à la valeur absolue maximale de la tension V_{HT}, et l'enveloppe 3 peut être en matériau polymère ou en céramique.

La spire 8 du circuit de détection 7 peut être agencée autour de l'électrode axiale 1, à l'intérieur de l'enveloppe 3 entre l'extrémité découverte 1P de l'électrode axiale 1 et l'extrémité antérieure du cylindre de la résistance de ballast 6. Grâce à une telle disposition, la détection des impulsions de décharge électrique à travers le gaz n'est pas perturbée par le courant qui est utilisé pour chauffer éventuellement l'électrode axiale 1.

Un avantage d'un tel mode de réalisation est sa compacité. En effet, la sonde S peut avoir la forme d'un cylindre d'un centimètre de diamètre environ, et de quelques centimètres de longueur.

Il est entendu que l'invention peut être reproduite en modifiant des aspects secondaires de celle-ci par rapport aux modes de réalisation qui ont été décrits en détail ci-dessus. En particulier, le compteur d'impulsions du circuit de détection peut être réalisé de multiples façons, en incorporant ou non un intégrateur. En outre, il est rappelé que la tension électrique alternative qui est appliquée entre les deux électrodes n'est pas nécessairement sinusoïdale.

## Revendications

1. Dispositif de mesure d'une vitesse d'un écoulement de gaz, comprenant :
- une sonde (S) rigide destinée à être placée dans l'écoulement (EC) de gaz, la sonde comprenant une électrode axiale (1) qui présente une extrémité (1P) découverte destinée à être en contact avec le gaz, ladite extrémité découverte ayant un rayon de courbure (R1) adapté pour produire un renforcement de champ électrique par effet de pointe, et comprenant une électrode périphérique (2) qui est isolée électriquement de l'électrode axiale, et qui possède une partie découverte (2P) aussi destinée à être en contact avec le gaz, située à distance de l'électrode axiale ; et
- une source d'alimentation (5) en tension électrique, ayant deux bornes de sortie (HT, G) qui sont connectées électriquement l'une à l'électrode axiale (1) et l'autre à l'électrode périphérique (2) ;
**caractérisé en ce que** la source d'alimentation (5) produit une tension électrique alternative (AC), et **en ce que** le dispositif comprend en outre :
- un circuit de détection (7), comprenant au moins une spire conductrice (8) disposée autour d'une connexion électrique (10) qui relie l'une des électrodes (1, 2) de la sonde (S) à l'une des bornes de la source d'alimentation (5), ou disposée autour de l'électrode axiale (1), et comprenant un compteur (9) agencé pour compter des impulsions électriques (I) qui sont générées dans la spire conductrice par induction, sélectivement pendant au moins une fenêtre de temps (FN) durant laquelle un potentiel électrique de l'électrode axiale (1) est inférieur à un potentiel électrique de l'électrode périphérique (2),
de sorte que lorsque la sonde (S) est alimentée avec la tension électrique alternative (AC) par la source d'alimentation (5), un nombre d'impulsions électriques (I) qui sont comptées par le circuit de détection (7), correspondant à un nombre de décharges électriques qui sont apparues entre l'électrode axiale (1) et l'électrode périphérique (2) à travers le gaz, constitue une mesure de la vitesse de l'écoulement (EC) du gaz.

2. Dispositif selon la revendication 1, dans lequel la partie découverte (2P) de l'électrode périphérique (2) possède une forme annulaire autour d'un axe de symétrie (A-A) de l'extrémité découverte (1P) de l'électrode axiale (1).

3. Dispositif selon la revendication 1 ou 2, dans lequel la partie découverte (2P) de l'électrode périphérique (2) est en retrait par rapport à l'extrémité découverte (1P) de l'électrode axiale (1), avec un sens de retrait qui est opposé à ladite extrémité découverte de l'électrode axiale.

4. Dispositif selon l'une quelconque des revendications précédentes, comprenant en outre une résistance de ballast (6) connectée en série entre l'une des électrodes (1, 2) de la sonde (S) et la borne de la source d'alimentation (5) qui est reliée à ladite électrode, et la résistance de ballast est agencée dans la sonde.

5. Dispositif selon la revendication 4, dans lequel la résistance de ballast (6) est disposée dans la sonde (S) autour d'une extrémité postérieure de l'électrode axiale (1), opposée à l'extrémité découverte (1P) de ladite électrode axiale, et est en contact électrique avec une surface périphérique de ladite extrémité postérieure de l'électrode axiale.

6. Dispositif selon la revendication 5, dans lequel la résistance de ballast (6) est formée par un cylindre de matériau conducteur électriquement, et la sonde (S) comprend en outre un tube (11) conducteur électriquement qui est disposé et connecté électriquement pour former un condensateur avec le cylindre de la résistance de ballast, de sorte qu'un courant électrique qui circule dans le condensateur lorsque la sonde est alimentée par la source d'alimentation (5), génère par effet Joule dans le cylindre de la résistance de ballast, de la chaleur apte à chauffer l'électrode axiale (1).

7. Dispositif selon la revendication 6, dans lequel la spire conductrice (8) est disposée dans la sonde (S) autour d'une partie de l'électrode axiale (1) qui n'est pas recouverte par le cylindre de la résistance de ballast (6), en étant isolée électriquement de ladite électrode axiale.

8. Procédé de mesure d'une vitesse d'un écoulement (EC) de gaz, comprenant :
/1/ fournir une sonde (S) rigide, comprenant une électrode axiale (1) qui présente une extrémité découverte (1P) avec un rayon de courbure (R1) adapté pour produire un renforcement de champ électrique par effet de pointe, et comprenant une électrode périphérique (2) qui est isolée électriquement de l'électrode axiale, et qui possède une partie découverte (2P) située à distance de l'électrode axiale ;
/2/ placer la sonde (S) dans l'écoulement (EC) de gaz, de sorte que l'extrémité découverte (1P) de l'électrode axiale (1) et la partie découverte (2P) de l'électrode périphérique (2) soient simultanément en contact avec le gaz ; et
/3/ appliquer une tension électrique entre l'électrode axiale (1) et l'électrode périphérique (2), de façon à produire des décharges électriques entre lesdites électrodes à travers le gaz ;
**caractérisé en ce que** la tension électrique qui est appliquée est une tension électrique alternative (AC), et **en ce que** le procédé comprend en outre les étapes suivantes :
/4/ détecter et compter des impulsions électriques (I) qui sont générées par induction dans au moins une spire (8) conductrice disposée autour d'une connexion électrique (10) utilisée pour appliquer la tension alternative (AC) aux électrodes (1, 2), ou disposée autour de l'électrode axiale (1), et qui correspondent à des décharges électriques à travers le gaz, sélectivement pendant au moins une fenêtre de temps (FN) durant laquelle un potentiel électrique de l'électrode axiale (1) est à inférieur à un potentiel électrique de l'électrode périphérique (2) ; et
/5/ déduire une valeur de la vitesse de l'écoulement (EC) du gaz à partir d'un résultat de comptage des impulsions électriques (I).

9. Procédé selon la revendication 8, suivant lequel la sonde (S) est orientée par rapport à l'écoulement (EC) de gaz de sorte que l'extrémité découverte (1P) de l'électrode axiale (1) soit tournée vers une direction amont de l'écoulement, et qu'un axe de symétrie (A-A) de ladite extrémité découverte (1P) de l'électrode axiale (1) soit parallèle audit écoulement de gaz.

10. Procédé selon la revendication 8 ou 9, suivant lequel le comptage des impulsions électriques (I) est poursuivi pendant plusieurs fenêtres de temps (FN) successives, chaque fenêtre de temps étant contenue dans une alternance négative (AN) du potentiel électrique de l'électrode axiale (1) par rapport au potentiel électrique de l'électrode périphérique (2), séparément de chaque autre fenêtre de temps.

11. Procédé selon l'une quelconque des revendications 8 à 10, suivant lequel une durée moyenne entre deux impulsions électriques (I) qui sont successives à l'intérieur d'une fenêtre de temps (FN), ou une fréquence moyenne des impulsions électriques à l'intérieur d'une fenêtre de temps, est calculée, et la valeur de la vitesse de l'écoulement (EC) du gaz est déduite de la durée moyenne ou de la fréquence moyenne.

12. Procédé selon l'une quelconque des revendications 8 à 11, suivant lequel la vitesse de l'écoulement (EC) de gaz est calculée en utilisant la formule U = U₁·(N₀ - N)/(N₀ - N₁), où N₀ est un premier nombre d'impulsions électriques (I) comptées pour une première mesure d'étalonnage effectuée lorsque la vitesse de l'écoulement de gaz est nulle, N₁ est un deuxième nombre d'impulsions électriques comptées pour une deuxième mesure d'étalonnage effectuée lorsque la vitesse de l'écoulement de gaz est non-nulle et égale à U₁, N est un troisième nombre d'impulsions électriques comptées pour une mesure utile, et U est une valeur de la vitesse de l'écoulement de gaz pendant la mesure utile, la tension électrique alternative (AC) appliquée entre les deux électrodes (1, 2) de la sonde (S) étant identique pour les première et seconde mesures d'étalonnage et pour la mesure utile.

13. Procédé selon l'une quelconque des revendications 8 à 12, mis en œuvre en utilisant un dispositif conforme à la revendication 6 ou 7, et suivant lequel une puissance de chauffage qui est dissipée dans la résistance de ballast (6) est ajustée en modifiant une fréquence ou une forme de la tension électrique alternative (AC) qui est produite par la source d'alimentation (5).

14. Procédé selon l'une quelconque des revendications 8 à 13, mis en œuvre à bord d'un aéronef (AV) adapté pour se déplacer par rapport à de l'air extérieur audit aéronef, la sonde (S) étant fixée rigidement à l'aéronef de façon à être maintenue dans l'écoulement (EC) de l'air en dehors dudit aéronef.

15. Procédé selon la revendication 14, dans lequel l'électrode périphérique (2) de la sonde (S) est connectée électriquement à une masse (G) de l'aéronef (AV), de sorte qu'un potentiel électrique de ladite électrode périphérique soit constamment égal à un potentiel électrique de ladite masse de l'aéronef.

## Patentansprüche

1. Messvorrichtung einer Geschwindigkeit einer Gasströmung, die enthält:
- eine starre Sonde (S), die dazu bestimmt ist, in der Gasströmung (EC) platziert zu werden, wobei die Sonde eine axiale Elektrode (1) enthält, die ein unbedecktes Ende (1P) aufweist, das dazu bestimmt ist, mit dem Gas in Kontakt zu sein, wobei das unbedeckte Ende einen Krümmungsradius (R1) hat, der geeignet ist, eine Verstärkung der elektrischen Feldstärke durch Spitzenwirkung zu produzieren, und eine Umfangselektrode (2) enthält, die elektrisch von der axialen Elektrode isoliert ist, und die einen unbedeckten Teil (2P) besitzt, der auch dazu bestimmt ist, mit dem Gas in Kontakt zu sein, der sich in Abstand zur axialen Elektrode befindet; und
- eine Versorgungsquelle (5) mit elektrischer Spannung, die zwei Ausgangsanschlüsse (HT, G) hat, die elektrisch der eine mit der axialen Elektrode (1) und der andere mit der Umfangselektrode (2) verbunden sind;
**dadurch gekennzeichnet, dass** die Versorgungsquelle (5) eine elektrische Wechselspannung (AC) produziert, und dass die Vorrichtung außerdem enthält:
- eine Erfassungsschaltung (7), die mindestens eine leitende Windung (8) enthält, die um eine elektrische Verbindung (10) herum angeordnet ist, die eine der Elektroden (1, 2) der Sonde (S) mit einem der Anschlüsse der Versorgungsquelle (5) verbindet, oder um die axiale Elektrode (1) herum angeordnet ist, und einen Zähler (9) enthält, der eingerichtet ist, um elektrische Impulse (I) zu zählen, die in der leitenden Windung durch Induktion erzeugt werden, selektiv während mindestens eines Zeitfensters (FN), während dessen ein erstes elektrisches Potential der axialen Elektrode (1) niedriger ist als ein elektrisches Potential der Umfangselektrode (2),
so dass, wenn die Sonde (S) durch die Versorgungsquelle (5) mit der elektrischen Wechselspannung (AC) versorgt wird, eine Anzahl von elektrischen Impulsen (I), die von der Erfassungsschaltung (7) gezählt werden, entsprechend einer Anzahl von elektrischen Entladungen, die zwischen der axialen Elektrode (1) und der Umfangselektrode (2) durch das Gas hindurch aufgetreten sind, einen Messwert der Geschwindigkeit der Strömung (EC) des Gases bildet.

2. Vorrichtung nach Anspruch 1, wobei der unbedeckte Teil (2P) der Umfangselektrode (2) eine Ringform um eine Symmetrieachse (A-A) des unbedeckten Endes (1P) der axialen Elektrode (1) besitzt.

3. Vorrichtung nach Anspruch 1 oder 2, wobei der unbedeckte Teil (2P) der Umfangselektrode (2) bezüglich des unbedeckten Endes (1P) der axialen Elektrode (1) eingerückt ist, mit einer Einrückrichtung, die dem unbedeckten Ende der axialen Elektrode entgegengesetzt ist.

4. Vorrichtung nach einem der vorhergehenden Ansprüche, die außerdem einen Ballastwiderstand (6) enthält, der zwischen einer der Elektroden (1, 2) der Sonde (S) und dem Anschluss der Versorgungsquelle (5), der mit der Elektrode verbunden ist, in Reihe geschaltet ist, und der Ballastwiderstand ist in der Sonde eingerichtet.

5. Vorrichtung nach Anspruch 4, wobei der Ballastwiderstand (6) in der Sonde (S) um ein hinteres Ende der axialen Elektrode (1) entgegengesetzt zum unbedeckten Ende (1P) der axialen Elektrode angeordnet ist, und mit einer Umfangsfläche des hinteren Endes der axialen Elektrode in elektrischem Kontakt ist.

6. Vorrichtung nach Anspruch 5, wobei der Ballastwiderstand (6) von einem Zylinder aus elektrisch leitendem Werkstoff gebildet wird, und die Sonde (S) außerdem ein elektrisch leitendes Rohr (11) enthält, das angeordnet und elektrisch verbunden ist, um mit dem Zylinder des Ballastwiderstands einen Kondensator zu bilden, so dass ein elektrischer Strom, der im Kondensator fließt, wenn die Sonde von der Versorgungsquelle (5) versorgt wird, durch Joule-Effekt im Zylinder des Ballastwiderstands Wärme erzeugt, die die axiale Elektrode (1) erwärmen kann.

7. Vorrichtung nach Anspruch 6, wobei die leitende Windung (8) in der Sonde (S) um einen Teil der axialen Elektrode (1) angeordnet ist, der nicht vom Zylinder des Ballastwiderstands (6) bedeckt wird, indem sie elektrisch von der axialen Elektrode isoliert ist.

8. Verfahren zur Messung einer Geschwindigkeit einer Gasströmung (EC), das enthält:
/1/ Bereitstellen einer starren Sonde (S), die eine axiale Elektrode (1) enthält, die ein unbedecktes Ende (1P) mit einem Krümmungsradius (R1) aufweist, der geeignet ist, eine Verstärkung einer elektrischen Feldstärke durch Spitzenwirkung zu produzieren, und eine Umfangselektrode (2) enthält, die elektrisch von der axialen Elektrode isoliert ist, und die einen unbedeckten Teil (2P) besitzt, der sich in Abstand zur axialen Elektrode befindet;
/2/ Platzieren der Sonde (S) in der Gasströmung (EC), so dass das unbedeckte Ende (1P) der axialen Elektrode (1) und der unbedeckte Teil (2P) der Umfangselektrode (2) gleichzeitig mit dem Gas in Kontakt sind; und
/3/ Anlegen einer elektrischen Spannung zwischen der axialen Elektrode (1) und der Umfangselektrode (2), um elektrische Entladungen zwischen den Elektroden durch das Gas hindurch zu produzieren;
**dadurch gekennzeichnet, dass** die elektrische Spannung, die angelegt wird, eine elektrische Wechselspannung (AC) ist, und dass das Verfahren außerdem die folgenden Schritte enthält:
/4/ Erfassen und Zählen von elektrischen Impulsen (I), die durch Induktion in mindestens einer leitenden Windung (8) erzeugt werden, die um eine elektrische Verbindung (10) herum angeordnet ist, die verwendet wird, um die Wechselspannung (AC) an die Elektroden (1, 2) anzulegen, oder um die axiale Elektrode (1) herum angeordnet ist, und die elektrischen Entladungen durch das Gas hindurch entsprechen, selektiv während mindestens eines Zeitfensters (FN), während dessen ein elektrisches Potential der axialen Elektrode (1) niedriger ist als ein elektrisches Potential der Umfangselektrode (2); und
/5/ Ableiten eines Werts der Geschwindigkeit der Strömung (EC) des Gases ausgehend von einem Zählergebnis der elektrischen Impulse (I).

9. Verfahren nach Anspruch 8, gemäß dem die Sonde (S) bezüglich der Gasströmung (EC) so ausgerichtet ist, dass das unbedeckte Ende (1P) der axialen Elektrode (1) zu einer stromaufwärtigen Richtung der Strömung weist, und dass eine Symmetrieachse (A-A) des unbedeckten Endes (1P) der axialen Elektrode (1) parallel zur Gasströmung ist.

10. Verfahren nach Anspruch 8 oder 9, gemäß dem das Zählen der elektrischen Impulse (I) während mehrerer aufeinanderfolgender Zeitfenster (FN) fortgesetzt wird, wobei jedes Zeitfenster in einer negativen Halbwelle (AN) des elektrischen Potentials der axialen Elektrode (1) bezüglich des elektrischen Potentials der Umfangselektrode (2) enthalten ist, getrennt von jedem anderen Zeitfenster.

11. Verfahren nach einem der Ansprüche 8 bis 10, gemäß dem eine mittlere Dauer zwischen zwei elektrischen Impulsen (I), die innerhalb eines Zeitfensters (FN) aufeinander folgen, oder eine mittlere Frequenz der elektrischen Impulse innerhalb eines Zeitfensters berechnet wird, und der Wert der Strömungsgeschwindigkeit (EC) des Gases von der mittleren Dauer oder der mittleren Frequenz abgeleitet wird.

12. Verfahren nach einem der Ansprüche 8 bis 11, gemäß dem die Geschwindigkeit der Gasströmung (EC) unter Verwendung der Formel U = U₁·(N₀ - N)/(N₀ - N₁) berechnet wird, wobei N₀ eine erste Anzahl elektrischer Impulse (I) ist, die für eine erste Kalibriermessung gezählt werden, die ausgeführt wird, wenn die Geschwindigkeit der Gasströmung Null ist, N₁ eine zweite Anzahl elektrischer Impulse ist, die für eine zweite Kalibriermessung gezählt werden, die ausgeführt wird, wenn die Geschwindigkeit der Gasströmung ungleich Null und gleich U₁ ist, N eine dritte Anzahl elektrischer Impulse ist, die für eine Nutzmessung gezählt, und U ein Wert der Geschwindigkeit der Gasströmung während der Nutzmessung ist, wobei die zwischen den zwei Elektroden (1, 2) der Sonde (S) angelegte elektrische Wechselspannung (AC) für die erste und zweite Kalibriermessung und für die Nutzmessung gleich ist.

13. Verfahren nach einem der Ansprüche 8 bis 12, das unter Verwendung einer Vorrichtung nach Anspruch 6 oder 7 durchgeführt wird, und gemäß dem eine Heizleistung, die im Ballastwiderstand (6) abgestrahlt wird, eingestellt wird, indem eine Frequenz oder eine Form der elektrischen Wechselspannung (AC) verändert wird, die von der Versorgungsquelle (5) produziert wird.

14. Verfahren nach einem der Ansprüche 8 bis 13, durchgeführt an Bord eines Luftfahrzeugs (AV), das geeignet ist, sich bezüglich der Luft außerhalb des Luftfahrzeugs zu bewegen, wobei die Sonde (S) starr am Luftfahrzeug befestigt ist, um in der Strömung (EC) der Luft außerhalb des Luftfahrzeugs gehalten zu werden.

15. Verfahren nach Anspruch 14, wobei die Umfangselektrode (2) der Sonde (S) elektrisch mit einer Masse (G) des Luftfahrzeugs (AV) verbunden ist, so dass ein elektrisches Potential der Umfangselektrode konstant gleich einem elektrischen Potential der Masse des Luftfahrzeugs ist.

## Claims

1. A device for measurement of a speed of a gas flow, comprising:
- a rigid probe (S) intended to be placed in the gas flow (EC), wherein the probe comprises an axial electrode (1) which has one exposed end (1P) intended to be in contact with the gas, said exposed end having a radius of curvature (R1) suitable to produce an electrical field strengthening through tip effect, and comprises a peripheral electrode (2) which is electrically isolated from the axial electrode and which has an exposed part (2P) also intended to be in contact with the gas, located away from the axial electrode; and
- an electrical voltage supply source (5), having two output terminals (HT, G) which are electrically connected to the axial electrode (1) for one of said output terminals and to the peripheral electrode (2) for the other one of said output terminals,
**characterized in that** the supply source (5) produces an alternating voltage (AC), and **in that** the device further comprises:
- a detection circuit (7), comprising at least one conducting turn (8) arranged around an electrical connection (10) which connects one of the electrodes (1, 2) of the probe (S) to one of the terminals of the supply source (5), or arranged around the axial electrode (1), and comprising a counter (9) arranged for counting electrical pulses (I) which are generated in the turn by induction, selectively during at least one time-window (FN) during which an electrical potential of the axial electrode (1) is less than an electrical potential of the peripheral electrode (2),
whereby when the probe (S) is supplied with the alternating voltage (AC) by the supply source (5), a number of electrical pulses (I) which are counted by the detection circuit (7), corresponding to a number of electrical discharges which have appeared between the axial electrode (1) and the peripheral electrode (2) through the gas, constitutes a measurement of the speed of the flow (EC) of the gas.

2. The device according to claim 1, wherein the exposed part (2P) of the peripheral electrode (2) has a ring shape around an axis of symmetry (A-A) of the exposed end (1P) of the axial electrode (1).

3. The device according to claim 1 or 2, wherein the exposed part (2P) of the peripheral electrode (2) is recessed relative to the exposed end (1P) of the axial electrode (1), with a recess direction that is opposite to said exposed end of the axial electrode.

4. The device according to any one of the preceding claims, further comprising a ballast resistance (6) connected in series between one of the electrodes (1, 2) of the probe (S) and the terminal of the supply source (5) that is connected to said electrode, and the ballast resistance is arranged in the probe.

5. The device according to claim 4, wherein the ballast resistance (6) is arranged in the probe (S) around a rear end of the axial electrode (1), opposite the exposed end (1P) of said axial electrode, and is in electrical contact with a peripheral surface of said rear end of the axial electrode.

6. The device according to claim 5, wherein the ballast resistance (6) is formed by a cylinder of electrically conducting material, and the probe (S) further comprises an electrically conducting tube (11) which is arranged and electrically connected to form a capacitor with the cylinder of the ballast resistance, so that an electrical current which flows in the capacitor when the probe is supplied by the supply source (5) generates heat suitable for heating the axial electrode (1) by Joule effect in the cylinder of the ballast resistance.

7. The device according to claim 6, wherein the conducting turn (8) is arranged in the probe (S) around a part of the axial electrode (1) which is not covered by the cylinder of the ballast resistance (6), while being electrically isolated from said axial electrode.

8. A method for measurement of a speed of a gas flow (EC), comprising:
/1/ providing a rigid probe (S) comprising an axial electrode (1) which has one exposed end (1P) with a radius of curvature (R1) suitable to produce an electrical field strengthening through tip effect, and comprising a peripheral electrode (2) which is electrically isolated from the axial electrode and which has an exposed part (2P) located away from the axial electrode;
/2/ placing the probe (S) in the gas flow (EC), so that the exposed end (1P) of the axial electrode (1) and the exposed part (2P) of the peripheral electrode (2) are simultaneously in contact with the gas; and
/3/ applying an electrical voltage between the axial electrode (1) and the peripheral electrode (2), so as to produce electrical discharges through the gas between said electrodes;
**characterized in that** the electrical voltage which is applied is an alternating voltage (AC), and **in that** the method further comprises the following steps:
/4/ detecting and counting electrical pulses (I) which are generated by induction in at least one conducting turn (8) arranged around an electrical connection (10) used for applying the alternating voltage (AC) to the electrodes (1, 2), or arranged around the axial electrode (1), and which correspond to electrical discharges through the gas, selectively during at least one time-window (FN) during which an electrical potential of the axial electrode (1) is less than an electrical potential of the peripheral electrode (2); and
/5/ deducing a value of the speed of the flow (EC) of the gas from a result of counting the electrical pulses (I).

9. The method according to claim 8, wherein the probe (S) is oriented relative to the gas flow (EC) so that the exposed end (1P) of the axial electrode (1) is turned to an upstream direction of the flow and that an axis of symmetry (A-A) of said exposed end (1P) of the axial electrode (1) is parallel to said flow of gas.

10. The method according to claim 8 or 9, wherein the counting of the electrical pulses (I) is continued over several successive time-windows (FN), where each time-window is contained in a negative half-cycle (AN) of the electrical potential of the axial electrode (1) relative to the electrical potential of the peripheral electrode (2), separately from each other time-window.

11. The method according to any one of claims 8 to 10, wherein an average time between two electrical pulses (I) which are successive within a single time-window (FN), or an average frequency of the electrical pulses within a single time-window, is calculated, and the value of the speed of the flow (EC) of the gas is deduced from the average time or the average frequency.

12. The method according to any one of claims 8 to 11, wherein the speed of the gas flow (EC) is calculated by using the formula U = U₁·(N₀ - N)/(N₀ - N₁), where N₀ is a first number of electrical pulses (I) counted for a first calibration measurement performed while the speed of the gas flow is zero, N₁ is a second number of electrical pulses counted for a second calibration measurement performed when the speed of the gas flow is non-zero and equal to U₁, N is a third number of electrical pulses counted for a useful measurement, and U is the value of the speed of the gas flow during the useful measurement, where the alternating voltage (AC) applied between the two electrodes (1, 2) of the probe (S) is identical for both calibration measurements and for the useful measurement.

13. The method according to any one of claims 8 to 12, implemented by using a device which is in accordance with claim 6 or 7, and wherein a heating power which is dissipated in the ballast resistance (6) is adjusted by modifying a frequency or shape of the alternating voltage (AC) which is produced by the supply source (5).

14. The method according to any one of claims 8 to 13, implemented on board an aircraft (AV) which is adapted for moving relative to air outside of said aircraft, where the probe (S) is rigidly attached to the aircraft so as to be maintained in the airflow (EC) outside the aircraft.

15. The method according to claim 14, wherein the peripheral electrode (2) of the probe (S) is electrically connected to a ground (G) of the aircraft (AV), so that an electrical potential of said peripheral electrode remains equal to an electrical potential of said ground of the aircraft.
